## Europäisches Patentamt
## European Patent Office
## Office européen des brevets

(19)

(11) Numéro de publication: **0 055 166**
**B1**

(12) # FASCICULE DE BREVET EUROPEEN

(45) Date de publication du fascicule du brevet:
**18.07.84**

(51) Int. Cl.³: **F 16 H 7/08**

(21) Numéro de dépôt: **81401971.7**

(22) Date de dépôt: **10.12.81**

(54) **Dispositif mécanique de tension pour chaîne ou courroie de transmission.**

(30) Priorité: **19.12.80 FR 8027028**

(43) Date de publication de la demande:
**30.06.82 Bulletin 82/26**

(45) Mention de la délivrance du brevet:
**18.07.84 Bulletin 84/29**

(84) Etats contractants désignés:
**DE GB IT**

(56) Documents cités:
**FR - A - 827 707**
**FR - A - 1 566 994**
**GB - A - 574 748**
**GB - A - 1 077 715**
**US - A - 2 717 520**

(73) Titulaire: **COMPAGNIE DES TRANSMISSIONS
MECANIQUES SEDIS Société dite:, 102 Rue Danton,
F-92306 Levallois Perret (FR)**

(72) Inventeur: **Kohler, Bernard, 45 Allée de la Forêt,
F-78170 La Celle Saint-Cloud (FR)**

(74) Mandataire: **Polus, Camille et al, c/o Cabinet
Lavoix 2, Place d'Estienne d'Orves, F-75441 Paris
Cedex 09 (FR)**

## Description

La présente invention se rapporte aux dispositifs mécaniques de tension pour chaînes ou courroies utilisées, en particulier, dans les commandes de distribution des moteurs á combustion interne.

Un tel dispositif de tension comporte généralement une rampe appliquée par un élément élastiques contre le brin non tendu de la chîne ou courroie et des moyens anti-retour pour empêcher re recul de la rampe sous l'effet d'une surtension passagère du brin non tendu de la chaîne ou courroie. Lorsque l'entraxe entre l'organe moteur et l'organe récepteur est grand comme c'est le cas des moteurs à arbre à cames en tête, le dispositif de tension, pour être efficace, doit s'appliquer sur la plus grande longueur possible du brin non tendu de la chaîne ou courroie.

Le brevet de Etats-Unis 2 717 520 décrit un dispositif d'absorption automatique du mou de l'un des brins d'une chaîne de transmission, comprenant un élément élastique recourbé en U inversé et dont les extrémités repliées et percées d'un trou sont enfilées sur deux tiges à peu près perpendiculaires au brin de la chaîne à tendre. Cet élément est déformable élastiquement et est poussé par un ressort, d'un seul côté, et la déformation élastique pouvant provoquer un blocage de l'une des extrémités de l'élément sur la tige correspondante de manière anti-retour.

En raison de son faible rayon de courbure, cet élément n'est en contact qu'avec une très courte portion de la chaîne et est sujet à de fortes vibrations.

Le brevet Britannique 574 748 décrit un dispositif de tension de chaîne comprenant une lame élastique incurvée à grand rayon ayant une extrémité fixe et une extrémité mobile coopérant avec une crémaillère articulée sur un axe fixe. Dans une variante ladite lame élastique est fixée sur la crémaillère articulée et est fixée sur une seconde lame souple qui coopère par une extrémité avec la crémaillère tandis que son extrémité opposée est ancrée sur un point fixe, un ressort de traction disposé suivant la corde de l'arc formé par la lame élastique force l'ensemble à s'incurver.

Ce dispositif présente parmi d'autres inconvénients celui de la difficulté de remplacement de la lame élastique.

La présente invention a pour but de réaliser un dispositif mécanique de tension pour chaînes ou courroies utilisées, en particulier, dans les commandes de distribution des moteurs à combustion interne à arbre à cames en tête, qui reprend les avantages de la technique antérieure décrite ci-dessus sans en avoir les inconvénients, c'est-à-dire qui ne nécessite qu'un minimum de pièces pour sa construction.

Le dispositif mécanique de tension selon l'invention, comprend une rampe constituée par au moins une lame de ressort incurvée ayant une surface de glissement et appliquée élastiquement en contact avec ladite chaîne ou courroie et pourvu de moyens anti-retour, pour empêcher le recul de la rampe, un support rigide rectiligne ayant une première extrémité constituant un organe de guidage tandis que son autre extrémité comporte des moyens d'arrêt, ladite lame incurvée ayant une extrémité en prise avec les moyens d'arrêt; il est caractérisé en ce que moyens anti-retour sont associés à l'extrémité opposée de la lame et sont constitués par un chariot monté coulissant sur l'organe de guidage et susceptible de basculer par rapport à celui-ci, ce chariot étant formé d'une plaque pliée en U comportant dans sa partie intermédiaire une lumière destinée à recevoir l'organe de guidage et des oreilles latérales parallèles en saillie sur les bords de ses ailes ces oreilles délimitant chacune un épaulement sur un même côté de la plaque et les extrémité des ailes étant incurvées vers l'intérieur.

D'autres caractéristiques et avantages de l'invention ressortiront de la description qui va suivre faite en se référant aux dessins annexés donnés uniquement à titre d'exemple et sur lesquels:

la fig. 1 est une vue en élévation latérale d'un mode de réalisation du dispositif de tension suivant l'invention, le chariot mobile étant verrouillé par une goupille pour le transport et le mise en place sur le moteur;

la fig. 2 est une vue analogue à la fig. 1 montrant le dispositif de tension en fin de course;

la fig. 3 est une vue en perspective du chariot mobile;

la fig. 4 est une vue de détail en élévation latérale du chariot et des lames en début de course;

la fig. 5 est une vue analogue à la fig. 4 montrant le chariot et les lames en fin de course, et

la fig. 6 est une vue partielle en élévation latérale montrant une variante de moyens d'arrêt constitués par un chariot identique au chariot mobile mais immobile sur le support.

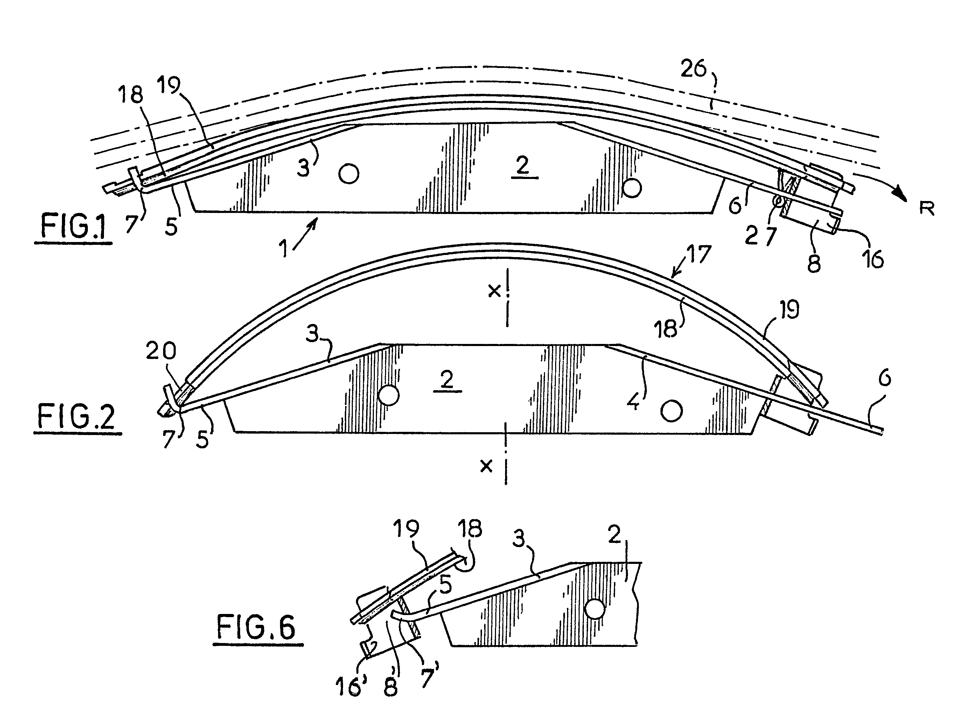

Dans l'exemple de rélisation illustré cotamment aux fig. 1 et 2, le dispositif suivant l'invention comprend un support 1 constitué par une plaque de métal 2 de forme allongée ayant deux parties 3, 4 repliées à angle droit et formant chacune un organe plat rigide 5, 6 respectivement s'étendant au-delà de l'extrémité de la plaque 2 obliquement et en sens inverse l'une de l'autre symétriquement par rapport à l'axe transversal médian x-x de la plaque 2.

L'organe 5 est replié vers l'extérieur, à l'opposé de la plaque 2, afin de former une butée d'arrêt 7, tandis que l'organe 6 est rectiligne afin de constituer un organe de guidage sur lequel peut coulisser un chariot 8.

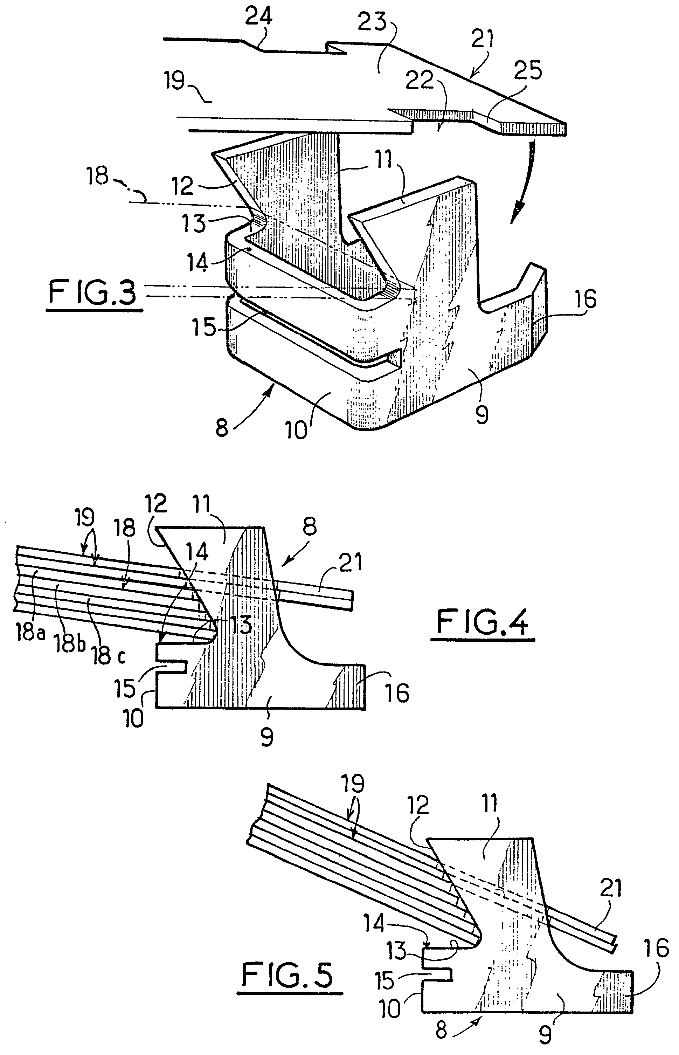

Le chariot 8 représenté aux fig. 3 à 5 est constitué par une plaque de métal relativement épaisse repliée en U, ayant deux ailes 9 reliées par une partie intermédiaire 10 relativement large et dont la longueur est un peu supérieure à la largeur de l'organe de guidage 6.

Chaque aile 9 comporte une oreille 11 s'étendant latéralement d'un même côté par rapport à la partie intermédiaire 10. Ces oreilles 11 sont parallèles et leur bord 12 voisin de l'extrémité de la partie intermédiaire 10 délimite avec l'aile 9 un épaulement 13 qui est de niveau avec le bord 14 de la partie intermédiaire 10.

Les bords 12 des oreilles 11 s'étendent obliquement vers le haut et vers l'extérieur en revenant au-dessus des épaulements 13, dans un but qui apparaitra dans la suite.

Le chariot 8 comporte dans sa partie intermédiaire 10 une ouverture 15 en forme de fente qui s'étend sur toute sa longueur et à peu près au milieu de sa largeur, et chaque oreille 9 comporte un appendice 16 dont la largeur dans une direction parallèle aux oreilles 11, est au plus égale à la moitié de la hauteur de la partie intermédiaire 10 et qui est légèrement incurvé vers l'intérieur (un seul de ces appendices étant visible au dessin). En d'autres termes, le bord supérieur de l'appendice 16 est sensiblement au même niveau que le bord inférieur de l'ouverture 15, afin d'empêcher le basculement donc le coincement, du chariot 8 lorsqu'il glisse vers la gauche sur les fig. 1 et 2, comme on le comprenda mieux ci-après.

Comme représenté aux fig. 1 et 2, le chariot 8 est disposé sur l'organe de guidage 6 qui est engagé dans sa fente 15 de manière que les appendices 16 des ailes 9 soient dirigés à l'opposé de la plaque 2 du support 1 et s'étendent au-dessous de l'organe de guidage 6 en raison de leur incurvation.

Le dispositif comprend enfin de façon connue une rampe incurvée 17 constituée par au moins une lame de ressort 18 portant une garniture anti-friction 19 et disposée en prise par une extrémité avec la butée d'arrêt 7 de l'organe 5 et d'autre part par son extrémité opposée avec le chariot lui-même monté coulissant sur l'organe de guidage 6.

Dans ce but la lame de ressort 18, qui présente de fabrication une forme incurvée à l'état non contraint, comporte à son extrémité coopérant avec la butée d'arrêt 7 une ouverture 20 adaptée pour recevoir celle-ci avec jeu, la lame 18 comportant au viosinage de son extrémité opposée 21 et un peu en retrait de celle-ci deux encoches latérales symétriques 22 délimitant entre elles une partie rétrécie 23 et, successivement vers l'extrémité 21, un premier et un second épaulement 24 et 25 respectivement, la largeur de la partie 23 étant un peu inférieure à la distance entre les oreilles 11 entre lesquelles elle est engagée en prise, les épaulement 24 étant en contact avec les épaulements 13 et les épaulements 25 de la lame 18 s'étendant de part et d'autre des bords opposés des oreilles 11.

On comprend bien entendu que la garniture anti-friction 19 présente à ses extrémités une forme indentique à celle de la lame 18.

La lame 18 étant incurvée à l'état non contraint, on utilise son élasticité inhérente pour appliquer la rampe contre le brin non tendu d'une chaîne 26 auprès duquel on doit monter le dispositif.

Dans ce but on »tend« la rampe 17 en la forçant à s'étendre contre le support 1, en l'allongeant ainsi au maximum comme représenté à la fig. 1 et on dispose une goupille 27 dans un trou de l'organe de guidage 6, devant le chariot 8 pour bloquer celui-ci et empêcher ainsi la lame 18 de reprendre sa forme incurvée initiale par élasticité.

On fixe le support 1 en place de façon que la rampe 17 soit en contact avec le brin non tendu de la chaîne 26 et on retire alors la goupille 27. La lame 18, tendant à reprendre sa forme incurvée initiale, exerce alors une pression sur la chaîne 26.

Les épaulements 25 de la lame 18 en contact avec le bord arrière des oreilles tendent alors à tirer le chariot 8 vers le milieu du support 1 en le faisant basculer.

Cependant les appendices 16 en contact avec la face inférieure de la lame 18, vers son extrémité 21, s'opposent à ce mouvement de basculement en maintenant la partie intermédiaire 10 à peu près perpendiculaire à la rampe 17.

En conséquence, le chariot 8 peut se déplacer librement en coulissant sur l'organe de guidage 6, vers le milieur du support 1.

Par contre, lorsque la pression de la chaîne 26 sur la rampe 17, en direction du support 1, tend à aplatir la lame 18 en allongeant sa flèche, les épaulements 24 en appui sur les bords 12 et sur les épaulements 13 tendent à faire basculer le chariot 8 vers l'extérieur du dispositif c'est-à-dire dans le sens horaire (flèche R, fig. 1) en considérant la fig. 1, qui éloigne les appendices 16 de l'organe de guidage 6.

Ce mouvement ne rencontrant pas d'opposition, le chariot 8 bascule dans le sens de la flèche R et les bords de l'ouverture 15 se bloquent sur l'organe de guidage 6.

Lorsque la rampe 17 est formée de plusieurs lames de ressort 18a, 18b, 18c etc. celles-ci sont prévues plus courtes de façon que leurs extrémités viennent en appui contre le bord avant 12 des oreilles 11.

Pour les mettre en place on fait basculer le chariot afin que les bords 12 soient alignés avec les bords d'extrémité des lames. Lorsque celles-ci sont incurvées, l'inclinaison des bords 12 assure un contact permanent avec toutes les extrémités des lames 18a, 18b, 18c etc. comme représenté aux fig. 4 et 5.

Dans une variante représentée à la fig. 6, l'extrémité de la rampe 17 coopérant avec l'organe 5 peut être immobilisée sur ce dernier au moyen d'un chariot 8' identique au chariot 8. Cependant, cette extrémité de la rampe ne nécessitant pas une liaison coulissante dans un seul sens comme celle décrite plus haut, le chariot 8' peut être immobilisé sur l'organe 5 en repliant légèrement son extrémité vers l'extérieur, comme représenté en 7', de manière que cette extrémité ne s'étende pas au-delà des appendices 16' du chariot 8'. Ainsi le chariot peut basculer et se bloquer dans les deux sens sous l'action d'une poussée ou d'une traction exercée par l'extrémité de la lame 18 qui est, bien entendu, dans ce cas conformée exactement comme l'extrémité 21.

Bien que les organes de guidage 7 aient été décrits comme formés chacun d'une partie repliée de la plaque 2 du support, et comme présentant par suite la forme d'une bande plate rigide, on comprend que ces organes peuvent avoir toute forme en section, par exemple la forme d'une barre de section transversale circulaire, carrée ou autre, fixée, par exemple soudée sur un autre élément que la plaque 2. Dans ce cas, la lumière 15 doit alors présenter une forme à peu près correspondante et les appendices 16 doivent se rejoindre afin d'assurer leur entrée en contact avec la surface inférieure de l'organe 6 pour maintenir le chariot 8 dans une position lui permettant de glisser le long de celui-ci.

L'invention fournit donc un dispositif de tension d'une chaîne ou courroie ayant un fonctionnement automatique, de fabrication simple et peu coûteuse.

## Revendications

1. Dispositif mécanique de tension pour chaîne ou courroie de transmission, comprenant une rampe (17) constituée par au moins une lame de ressort (18) incurvée ayant une surface de glissement (19) et appliquée élastiquement en contact avec ladite chaîne ou courroie (26) et pourvu de moyens anti-retour, pour empêcher le recul de la rampe (17), comprenant un support rigide rectiligne (1) ayant une première extrémité constituant un organe de guidage (6) tandis que son autre extrémité (5) comporte des moyens d'arrêt (7), ladite lame incurvée (18) ayant une extrémité en prise avec les moyens d'arrêt (7), caractérisé en ce que les moyens anti-retour sont associés à l'extrémité opposée (21) de la lame (18) et sont constitués par un chariot (8) monté coulissant sur l'organe de guidage (6) et susceptible de basculer par rapport à celui-ci, ce chariot (8) étant formé d'une plaque pliée en U comportant dans sa partie intermédiaire (10) une lumière (15) destinée à recevoir l'organe de guidage (6) et des oreilles latérales (11) parallèles en saillie sur les bords de ses ailes (9), ces oreilles (11) délimitant chacune un épaulement (13) sur un même côté de la plaque et les extrémités (16) des ailes (9) étant incurvées vers l'intérieur.

2. Dispositif suivant la revendication 1, caractérisé en ce que les moyens d'arrêt (7) à l'autre extrémité (5) du support (1) sont constitués par une extrémité du support, relevée et adaptée pour coopérer avec jeu avec des moyens complémentaires (20) prévus sur l'extrémité correspondante de la lame (18).

3. Dispositif suivant la revendication 1, caractérisé en ce que les moyens d'arrêt (7') à l'autre extrémité (5) du support (1) sont adaptés pour coopérer avec un second chariot (8') engagé en prise et immobilisé sur ladite autre extrémité (5) du support (1).

4. Dispositif suivant la revendication 1, caractérisé en ce que les bords (12) des oreilles (11) délimitant les épaulements (13) sont inclinés de façon à s'étendre en revenant au-dessus de ceux-ci, en sens inverse des ailes (9).

5. Dispositif suivant la revendication 1, caractérisé en ce que la ou les lames (18, 18a, 18b) présentent, à l'état non contraint une certaine courbure.

## Patentansprüche

1. Mechanische Spannvorrichtung für Antriebsketten oder -riemen, welche eine Rampe (17) umfaßt, welche durch wenigstens ein gekrümmtes Federblatt (18) gebildet ist, das eine Gleitfläche (19) hat und elastisch gegen die Kette oder den Riemen (26) gelegt und mit Rückbewegungssicherungsmitteln zur Verhinderung des Zurückspringens der Rampe (17) versehen ist, und welche ferner einen starren geradlinigen Träger (1) mit einem ein Führungselement (6) bildenden ersten Ende, während sein anderes Ende (5) Anschlagmittel (7) aufweist, umfaßt, wobei das gekrümmte Blatt (18) ein mit den Anschlagmitteln (7) in Eingriff befindliches Ende aufweist, dadurch gekennzeichnet, daß die Rückbewegungssicherungsmittel dem entgegengesetzten Ende (21) des Blattes (18) zugeordnet und durch einen gleitend auf dem Führungselement (6) angebrachten und bezüglich desselben kippbaren Schlitten gebildet sind, wobei der Schlitten (8) aus einer U-förmig gebogenen Platte gebildet ist, die in ihrem Mittelteil (10) eine Öffnung (15) zur Aufnahme des Führungselements (6) und über die Ränder ihrer Schenkel (9) vorspringende parallele seitliche Lappen (11) aufweist, wobei diese Lappen (11) jeweils eine Schulter (13) auf der gleichen Seite der Platte begrenzen und die Enden (16) der Schenkel (9) nach innen gekrümmt sind.

2. Vorrichtung nach Anspruch 1, dadurch gekennzeichnet, daß die Anschlagmittel (7) am anderen Ende (5) des Trägers (1) durch ein Ende des Trägers gebildet sind, welches hochgezogen und für ein Zusammenwirken unter Spiel mit am entsprechenden Ende des Blattes (18) vorgesehenen komplementären Mitteln (20) eingerichtet ist.

3. Vorrichtung nach Anspruch 1, dadurch gekennzeichnet, daß die Anschlagmittel (7') am anderen Ende (5) des Trägers (1) für ein Zusammenwirken mit einem zweiten Schlitten (8') eingerichtet sind, welcher mit dem anderen Ende (5) des Trägers (1) in Eingriff steht und auf diesem festgelegt ist.

4. Vorrichtung nach Anspruch 1, dadurch gekennzeichnet, daß die Ränder (12) der die Schultern (13) begrenzenden Lappen (11) über diese zurückkommend im umgekehrten Sinne zu den Schenkeln (9) sich erstreckend geneigt sind.

5. Vorrichtung nach Anspruch 1, dadurch gekennzeichnet, daß das oder die Blätter (18, 18a, 18b) in nicht gespanntem Zustand eine gewisse Krümmung aufweisen.

## Claims

1. A mechanical device for tensioning a transmission chain or belt, comprising a ramp (17) constituted by at least one curved spring strip (18) having a sliding surface (19) and resiliently applied against said chain or belt (26) and provided with anti-return means for preventing the withdrawal of the ramp (17), comprising a rectilinear rigid support (1) having a first end constituting a guide element (6) while its other end (5) has stop means (7), said curved strip (18) having one end engaged with the stop means (7), characterised in that the anti-return means are associated with the opposite end (21) of the strip (18) and are constituted by a carriage (8) slidably mounted on the guide element (6) and tiltable relative to the latter, said carriage (8) being formed by a plate bent in the shape of a U and including in its intermediate part (10) an opening (15) for receiving the guide element (6) and lateral ears (11) which are parallel and project from the edges of its wings (9), these ears (11) each defining a shoulder (13) on the same side of the plate and the ends (16) of the wings (9) being inwardly curved.

2. A device according to claim 1, characterised in that the stop means (7) at the other end (5) of the support (1) are constituted by an end of the support which is raised and adapted to cooperate with clearance with complementary means (20) provided on the corresponding end of the strip (18).

3. A device according to claim 1, characterised in that the stop means (7') at the other end (5) of the support (1) are adapted to cooperate with a second carriage (8') which is engaged and immobilised on said other end (5) of the support (1).

4. A device according to claim 1, characterised in that the edges (12) of the ears (11) defining the shoulder (13) are so inclined as to extend over the shoulders in the opposite direction to the wings (9).

5. A device according to claim 1, characterised in that the strip or strips (18, 18a, 18b) have a certain curvature in the non-stressed state.

FIG.1

FIG.2

FIG.6

0 055 166

FIG.3

FIG.4

FIG.5